# EUROPÄISCHE PATENTSCHRIFT

(11) **EP 1 402 095 B1**
(45) Veröffentlichungstag und Bekanntmachung des Hinweises auf die Patenterteilung: **22.08.2007**
(21) Anmeldenummer: 02750934.8
(22) Anmeldetag: 16.05.2002
(51) Int. Cl.: D02J 13/00, H05B 6/14, F16C 39/06

(54) **GALETTE**
GALETTE
GALETTE

(30) Priorität: 21.05.2001 DE 10124626; 21.06.2001 DE 10129979
(43) Veröffentlichungstag der Anmeldung: 31.03.2004
(73) Patentinhaber: Oerlikon Textile GmbH & Co. KG, 41069 Mönchengladbach (DE)
(72) Erfinder: KOCH, Thomas, 42929 Wermelskirchen (DE); KUDRUS, Heiner, 25355 Barmstedt (DE)
(74) Vertreter: Kahlhöfer, Hermann
(86) Internationale Anmeldenummer: PCT/EP2002/005398
(87) Internationale Veröffentlichungsnummer: WO 2002/095103

(56) Entgegenhaltungen:
- EP-A- 0 607 586
- DE-C- 19 843 990
- US-A- 3 562 472
- US-A- 3 772 492
- US-A- 4 350 861

## Beschreibung

Die Erfindung betrifft eine Galette zum Führen von zumindest einem Faden gemäß dem Oberbegriff des Anspruchs 1.

Eine gattungsgemäße Galette ist aus der DE 197 33 239 A1 bekannt

Bei der bekannten Galette ist ein hohlzylindrischer Galettenmantel an einem auskragenden Träger magnetisch gelagert. Hierzu sind mehrere radial wirkende Magnetlager vorgesehen, die grundsätzlich aus einem drehenden Teil und einem stehenden Teil gebildet sind. Hierbei wird zwischen einer passiven magnetischen Lagerung und einer aktiven magnetischen Lagerung unterschieden. Die Erfindung beschränkt sich auf die aktiv radial magnetische Lagerung. Dabei wird das stehende Teil des Magnetlagers durch zumindest ein Polelement gebildet, das ein oder mehrere Wicklungen trägt. Das Polelement besitzt Polenden, die in einem Lagerspalt dem drehenden Teil des Magnetlagers gegenüberstehen. Bei der bekannten Galette wird das drehende Teil des Magnetlagers durch eine drehende Welle, die mit dem Galettenmantel verbunden ist, oder direkt durch den Galettenmantel gebildet Hierbei müssen die Werkstoffe der Welle bzw. des Galettenmantels derart ausgeführt sein, daß ein geschlossener magnetischer Fluß zwischen den Polenden entsteht. Somit ist die Wahl der Werkstoffe unter Berücksichtigung einer Magnetisierung für die Welle bzw. den Galettenmantel zu treffen sowie die Erfordernisse zur Erfüllung der Bauteilfunktionen zu berücksichtigen. Ein weiterer Nachteil der bekannten Galette liegt darin, daß beim Übergang des magnetischen Flusses in die Welle bzw. den Galettenmantel Ummagnetisierungsverluste, Wirbelstromverluste sowie eventuelle Streuverluste auftreten. Derartige Verluste müssen ggf. durch die Antriebsleistung des Galettenantriebes gedeckt werden.

Auch die aus der EP 0 770 719 A1 bekannte Galette besitzt ebenfalls derartige Nachteile, wobei die Polenden unmittelbar den drehenden Bauteilen der Galette mit einem Lagerspalt gegenüberliegen.

Es ist Aufgabe der Erfindung, eine Galette der eingangs genannten Art mittels radial wirkender Magnetlager derart auszubilden, daß möglichst geringe Verluste in den Magnetlagern auftreten.

Ein weiteres Ziel der Erfindung ist es, die gegenseitige Beeinflussung der rotierenden Bauteile der Galette mit den Teilen des Magnetlagers zu minimieren.

Die erfindungsgemäße Aufgabe wird durch eine Galette mit den Merkmalen nach Anspruch 1 gelöst.

Vorteilhafte Weiterbildungen der Erfindung sind in den Unteransprüchen definiert.

Die Erfindung zeichnet sich dadurch aus, daß das drehende Teil des Magnetlagers durch ein separates Mittel in Form einer Blechung gebildet ist, daß mit dem drehbar gelagerten Bauteil der Galette fest verbunden ist. Das drehende Bauteil der Galette zur Aufnahme der Blechung muß die für die Lagerung erforderliche Magnetisierbarkeit nicht aufweisen. Das Polelement des stehenden Teils der Magnetlagerung sowie die Blechung des drehenden Teils der Magnetlagerung wirken zur Führung des magnetischen Flusses zusammen. Hierbei können bei der Gestaltung und Werkstoffwahl der Blechung die Erfordernisse geringer Ummagnetisierungsverluste sowie geringer Wirbelstromverluste Berücksichtigung finden. Dadurch werden die Verluste der magnetischen Lagerung erheblich reduziert, so daß Zusatzleistungen des Antriebes vermieden werden können. Selbst bei hohen Tragkräften treten relativ geringe Erwärmungen in der Blechung auf.

Bei einem besonders bevorzugten Ausführungsbeispiel ist die Blechung direkt an der Innenseite des Galettenmantels befestigt. Hierzu kann die Blechung zur Raumeinsparung in den Galettenmantel eingebettet sein oder auf einfache Weise direkt auf der Oberfläche der Innenseite fixiert sein. Dabei muß sichergestellt sein, daß den Polenden des Polelementes die Blechung mit einem Abstand radial gegenübersteht, um möglichst einen störungsfreien Magnetfluß zum Aufbau der Lagerkräfte zu gewährleisten.

In Abhängigkeit von der Wicklungsrichtung der Erregerwicklungen der Polelemente können die Polenden derart zueinander ausgebildet sein, dass der Magnetfluß radial oder axial ausgerichtet ist. Um bei einem radial ausgerichteten Magnetfluß die Verluste möglichst gering zu halten, wird die erfindungsgemäße Galette bevorzugt entsprechend der Weiterbildung nach Anspruch 3 ausgeführt. Die Blechung wird dabei aus einer Vielzahl von scheibenförmigen Blechringen gebildet, die in axialer Richtung nebeneinanderliegend zu einer Blechhülse zusammengefügt sind. Dabei überdeckt die hülsenförmige Blechung die Polenden. Bei einem axial ausgerichteten Magnetfluß ist die Blechung vorzugsweise aus einer Vielzahl scheibenförmiger, dünner Blechsegmente gebildet. Die Blechsegmente sind in Umfangsrichtung hintereinander zu einer geschlossenen Blechhülse zusammengefügt, wobei zumindest ein oder vorzugsweise beide Polenden überdeckt sind.. Für den Fall, daß die Blechung nur ein Polende überdeckt, ist zur Führung des Magnetflusses dem zweiten Polende eine weitere Blechung zugeordnet Die Ausgestaltung der Blechung aus mehreren scheibenförmigen, dünnen Blechringen oder Blechsegmenten besitzt den besonderen Vorteil, daß die Ummagnetisierungsverluste und Wirbelstromverluste sehr stark herabgesetzt werden können. Die scheibenförmigen Blechringe oder Blechsegmente sind als ein Bauteil an dem Galettenmantel befestigt. Die einzelnen Blechringe oder Blechsegmente werden bevorzugt durch ein Isoliermaterial miteinander verbunden.

Eine besonders bevorzugte Weiterbildung der Erfindung, bei welcher eine Isolierschicht zwischen dem Galettenmantel und der Blechung ausgebildet ist, um einen Wärmeaustausch und/oder einen magnetischen Streufluß zwischen der Blechung und dem Galettenmantel zu vermeiden, zeichnet sich besonders dadurch aus, daß Wechselwirkungen drastisch reduziert werden. Diese Weiterbildung ist somit insbesondere für Galetten geeignet, deren Galettenmantel beheizt ist, um einen am Umfang des Galettenmantels geführten Faden thermisch zu behandeln. Die Isolierschicht zwischen dem Galettenmantel und der Blechung verhindert somit eine unzulässige thermische Belastung der Blechung.

Als besonders vorteilhaft läßt sich die Isolierschicht durch einen wellenförmigen Mantelring bilden, welcher sich über äußere Wellenbögen an der Innenseite des Galettenmantels abstützt. Durch die geringe Kontaktfläche wird somit eine zusätzliche Entkoppelung zwischen der Blechung und dem Galettenmantel erreicht.

Es ist jedoch auch möglich, der Blechung ein Kühlmittel zuzuordnen, um die in der Blechung aufgrund von Wirbelstromverlusten oder aufgrund äußerer Einwirkungen auftretende Wärme abzuführen. Damit können die günstigen Eigenschaften zur Führung des Magnetflusses in der Blechung vorteilhaft beibehalten werden.

Als Kühlmittel wird vorzugsweise ein Fluidstromerzeuger verwendet, welcher einen Kühlffudidstrom, vorzugsweise einen Kühlluftstrom, erzeugt, der beispielsweise durch Bohrungen innerhalb der Blechung oder entlang mehrerer Kühlrippen an der Oberfläche der Blechung geführt wird.

Vorzugsweise weist der stehende Teil des Magnetlagers mehrere Polelemente mit mehreren Wicklungen auf, die gleichmäßig,am Umfang des Trägers verteilt angeordnet sind. Dabei wird gemäß einer vorteilhaften Weiterbildung der Erfindung den Polelementen in einer Lagerebene eine gemeinsame Blechung zugeordnet.

Die besonders vorteilhafte Weiterbildung der Erfindungen gemäß Anspruch 10 und 11 besitzt den Vorteil, daß die Anordnung der Polelemente in mehreren Lagerebenen zu einer Vergleichmäßigung der Verteilung der Position, an denen Kraft zur radialen Lagerung des Galettenmantels eingeleitet wird, führt. Jeder Lagerebene ist vorzugsweise eine von mehreren Blechungen zugeordnet. Damit wird neben der hohen Tragfähigkeit eine Steifigkeit der Lagerung bei geringen Verlusten erreicht, die insbesondere bei lang auskragenden Galetten die Tendenz zur Verformung reduziert.

Um das Zusammenwirken aller Wicklungen des Magnetlagers sicherzustellen, ist gemäß einer vorteilhaften Weiterbildung der Erfindung jedem Polelement jeweils ein Sensor zur Überwachung eines Lagerspalts bzw. zur Überwachung der Lage des Galettenmantels zugeordnet. Die Sensoren und die Wicklungen der Polelemente sind mit einer Steuereinrichtung verbunden, so daß jede signalisierte Lagerspaltabweichung sofort ausregelbar ist. Dabei werden die Wicklungen eines Polelementes bevorzugt einzeln durch die Steuereinrichtung angesteuert. Es ist jedoch auch möglich, mehrere Wicklungen mehrerer Polelemente einer Lagerebene als ein Paar durch die Steuereinrichtung zu steuern.

Bei langen Galetten wird der Galettenmantel bevorzugt nach der Weiterbildung gemäß Anspruch 13 gelagert. Dabei sind zwei in Abstand zueinander angeordnete radial wirkende Magnetlager vorgesehen. Zur Aufnahme der Axialkräfte ist der Galettenmantel zusätzlich durch ein Axiallager gelagert. Das Axiallager könnte hierbei ebenfalls als ein axial wirkendes Magnetlager ausgebildet sein, um eine berührungsfreie Führung zu erhalten, so daß höhrere Geschwindigkeiten des Galettenmantels ermöglicht werden.

Einige Ausführungsbeispiele der erfindungsgemäßen Galette sind im folgenden unter Hinweis auf die beigefügten Zeichnungen näher beschrieben.

Es stellen dar:
- Fig. 1 und 2: schematisch ein erstes Ausführungsbeispiel der erfindungsgemäßen Galette;
- Fig. 3 und 4: schematisch ein weiteres Ausführungsbeispiel der erfindungsgemäßen Galette;
- Fig. 5: schematisch eine Schnittansicht eines Ausführungsbeispiels einer Magnetlagerung

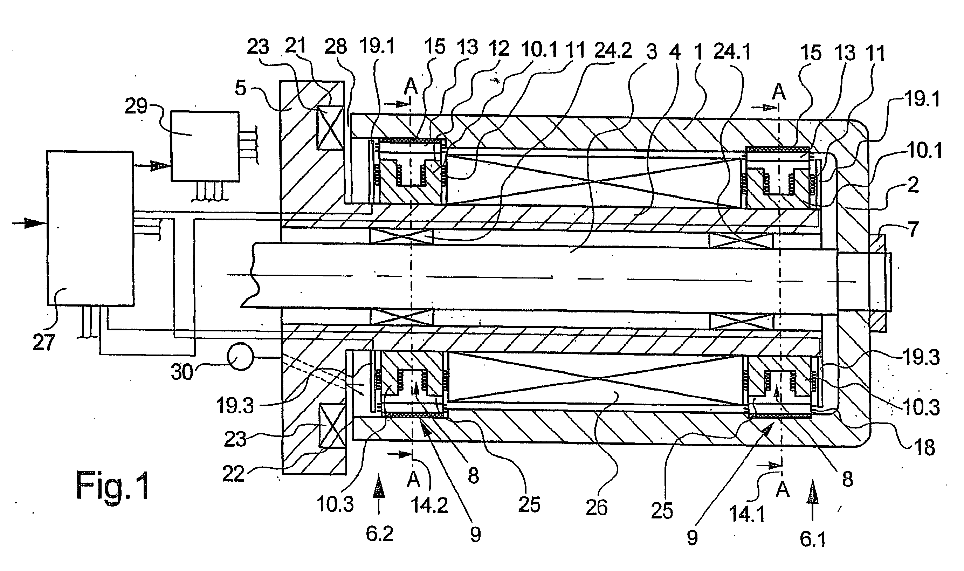

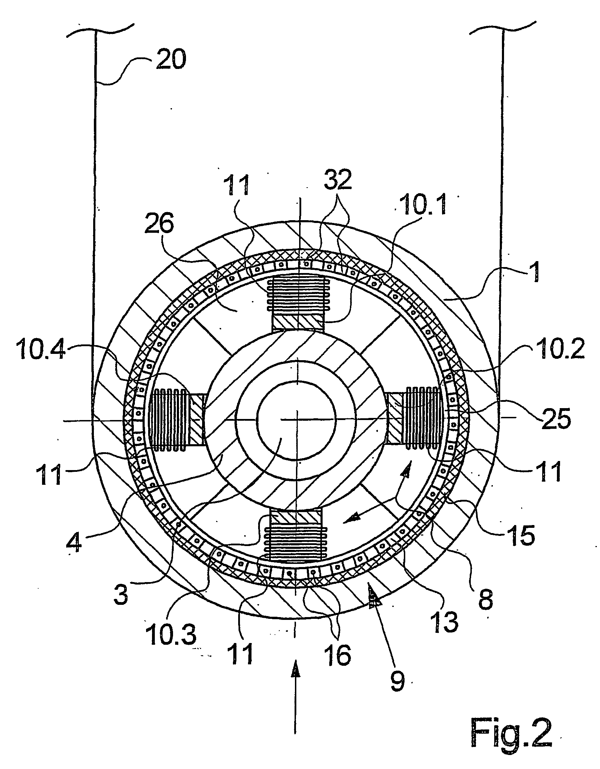

In den Figuren 1 und 2 ist ein erstes Ausführungsbeispiel der erfindungsgemäßen Galette schematisch dargestellt Die Fig. 1 zeigt die für die Erfindung wesentlichen Teile der Galette anhand eines parallel zur und durch die Drehachse verlaufenden Schnitts, und Fig. 2 zeigt schematisch eine Schnittansicht senkrecht zur Drehachse der Galette. Die nachfolgende Beschreibung gilt somit für beide Figuren, insoweit kein ausdrücklicher Bezug zu einer der Figuren genommen ist. Das Ausführungsbeispiel der erfindungsgemäßen Galette weist einen Galettenmantel 1 auf, der über eine Stirnwand 2 mit einer im Innern des Galettenmantels 1 verlaufenden Antriebswelle 3 drehfest verbunden ist. Hierzu ist am Ende der Antriebswelle 3 ein Spannelement 7 zur Befestigung des Galettenmantels 1 vorgesehen. Die Antriebswelle 3 ist mit ihrem gegenüberliegenden Ende mit einem Antrieb (hier nicht dargestellt) gekoppelt. Als Antrieb könnte hierbei beispielsweise ein Elektromotor vorgesehen sein.

Der Galettenmantel 1 ist durch zwei radial wirkende Magnetlager 6.1 und 6.2 an einem auskragenden Träger 4 gelagert. Der Träger 4 ist hohlzylindrisch ausgebildet und erstreckt sich innerhalb des Galettenmantels 1 bis kurz vor die Stirnwand 2. Der hohlzylindrische Träger 4 wird hierbei von der Antriebswelle 3 durchdrungen. Auf der zur Stirnwand gegenüberliegenden Seite ist der Träger 4 über einen Bund 5 an einem Maschinengestell (hier nicht dargestellt) befestigt.

Die Magnetlager 6.1 und 6.2 sind identisch aufgebaut, so daß die nachfolgende Beschreibung für beide Magnetlager gilt. Das Magnetlager 6 besteht aus einem stehenden Teil 8, der an dem Träger 4 befestigt ist, und einem drehenden Teil 9, das an der Innenseite des Galettenmantels 1 befestigt ist und mit dem Galettenmantel 1 umläuft. Der stehende Teil 8 des Magnetlagers 6 wird durch mehrere Polelemente 10 gebildet, die gleichmäßig am Umfang des Trägers 4 verteilt angebracht sind. In diesem Ausführungsbeispiel ist der stehende Teil 8 des Magnetlagers 6 durch vier Polelemente 10.1, 10.2, 10.3 und 10.4 bildet Jedes der Polelemente ist U-förmig ausgebildet und besitzt die Polenden 12. An den Schenkeln der U-förmigen Polelemente 10.1 bis 10.4 sind Erregerwicklungen 11 aufgenommen, die mit einer Energieversorgungseinheit 29 verbunden sind. Die Erregerwicklung 11 und die Polenden 12 eines Polelementes 10 sind derart ausgeführt, dass ein axial ausgerichtetes Magnetfeld erzeugt wird.

Die Polelemente 10.1 bis 10.4 sind in einer Lagerebene 14 jeweils um 90° versetzt zueinander am Umfang des Trägers 4 angebracht.

Das drehende Teil 9 des Magnetlagers 6 wird durch eine Blechung 13 und eine mit der Blechung 13 verbundene Isolierschicht 15 gebildet, die gemeinsam an der Innenseite des Galettenmantels 1 befestigt sind. Die Blechung 13 ist hierbei aus einer Vielzahl scheibenförmiger, dünnwandiger Blechsegmente 32 gebildet, die radial hintereinander liegend zu einer Blechhülse zusammengefügt sind. Die blechsegmente sind jeweils durch ein Isoliermaterial miteinander verbunden. Die Isolierschicht 15 ist ebenfalls hülsenförmig ausgebildet und umschließt die hülsenförmige Blechung 13 vollständig. Die Blechung 13 erstreckt sich in axialer Richtung soweit, daß die Polenden 12 der Polelemente 10.1 bis 10.4 vollständig überdeckt sind und zwischen den Polenden 12 der Polelemente 10.1 bis 10.4 und der Blechung 13 ein Lagerspalt 25 gebildet wird, so daß zwischen den Polelementen 10.1 bis 10.4 und der Blechung 13 eine magnetische Kraft erzeugbar ist. Die Polelemente 10 können aus einem Vollmaterial oder aus einer Vielzahl von Blechen, die radial und/oder axial hintereinander gestapelt sind, geformt sein.

Die Magnetlager 6.1 und 6.2 sind in Abstand zueinander am Umfang des Trägers 4 ausgebildet, wobei sich das Magnetlager 6.1 an einem freien Ende des Trägers 4 und das Magnetlager 6.2 im Bereich des fest eingespannten Endes des Trägers 4 befindet. Zwischen den Magnetlagern 6.1 und 6.2 ist eine Heizeinrichtung 26 zur Beheizung des Galettenmantels 1 am Umfang des Trägers 4 angebracht. Die Heizeinrichtung 26 könnte hierbei beispielsweise durch ein oder mehrere Wicklungen gebildet sein, die eine Erwärmung des Galettenmantels durch Induktion bewirken:

Jedem Polelement 10 der Magnetlager 6.1 und 6.2 ist jeweils ein Sensor 19 zugeordnet. Die Sensoren 19 sind als Abstandssensoren ausgeführt, um die Lage des Galettenmantels 1 zu erfassen. Hierzu sind die freien Enden der Sensoren 19 in kurzem Abstand zu einer Innenseite des Galettenmantels 1 angeordnet. Die Sensoren 19.1 bis 19.4 der Magnetlager 6.1 und 6.2 sind durch Signalleitungen mit einer Lagersteuereinheit 27 gekoppelt. Die Lagersteuereinheit 27 ist über die Energieversorgungseinheit 29 mit den Erregerwicklungen 11 der Polelemente 10.1 bis 10.4 der Magnetlager 6.1 und 6.2 verbunden.

Aus der Darstellung aus Fig. 1 ist zu entnehmen, daß der Durchmesser des Bundes 5 des Trägers 4 größer ist als der Durchmesser des Galettenmantels 1. Der Bund 5 des Trägers 4 weist zum Galettenmantel 1 hin eine ringförmige Nut 21 auf, die ein Axiallager 23 aufnimmt. Das Axiallager 23 ist als axial wirkendes Magnetlager ausgebildet, das mit der Stirnseite 22 des Galettenmantels 1 einen axialen Lagerspalt 28 bildet.

Im Innern des Trägers 4 sind zwischen der Antriebswelle 3 und dem Träger 4 zwei in Abstand zueinander angeordnete Notlauflager 24.1 und 24.2 ausgebildet. Damit ist ein sicheres Anlaufen bzw. ein Notlauf des Galettenmantels 1 unabhängig von der Magnetlagerung gewährleistet. Als Notlauflager können beispielsweise Gleitlager oder Wälzlager verwendet werden.

Das in Fig. 1 und 2 dargestellte Ausführungsbeispiel der erfindungsgemäßen Galette wird zum Fördern, thermischen Behandeln und Verstrecken von Fäden eingesetzt. Hierbei werden hohe Zugkräfte in den Fäden erzeugt, die im Betrieb zu einer im wesentlichen statischen Belastung der Galette führt. Die Belastung wird unmittelbar an dem Umfangsbereich des Galettenmantels 1 eingeleitet, der von einem oder mehreren Fäden umschlungen ist. Im Betrieb wird die aktuelle Lage des Galettenmantels 1 durch die Sensoren 19 im Bereich der Lagerebenen 14.1 und 14.2 gemessen, und die Meßwerte werden der Lagersteuereinheit 27 zugeleitet. In der Lagersteuereinheit 27 wird aus den Meßwerten die Lage des Galettenmantels 1 in den Lagerebenen 14.1 und 14.2 ermittelt und entsprechend der gewünschten Korrektur der Lage werden die einzelnen Erregerwicklungen 11 der Polelemente 10 der Magnetlager 6.1 und 6.2 angesteuert. Somit stellt sich zwischen der Blechung 13 und den Polenden 12 der Polelemente 10 ein im wesentlichen gleichbleibender Lagerspalt 25 ein. Durch den schichtweisen Aufbau der Blechung 13 durch das Zusammenfügen mehrerer Blechsegmente 32 finden keine wesentlichen Ummagnetisierungsverluste beim Übergang des magnetischen Flusses in die Blechung statt.

Der Galettenmantel 1 wird durch die Heizeinrichtung 26 erwärmt. Zur Regelung der Oberflächentemperatur des Galettenmantels sind ein oder mehrere Temperatursensoren (hier nicht dargestellt) vorgesehen, die über Signalleitungen mit einer Heizsteuerung verbunden sind und somit eine Sollwerteinstellung der Oberflächentemperaturen ermöglichen.

Um eine unerwünschte Erwärmung der Blechung 13 durch Wärmeübergang von dem Galettenmantel 1 zur Blechung 13 zu vermeiden, ist die Blechung 13 durch die Isolierschicht 15 getrennt von dem Galettenmantel. Dabei könnte die Isolierschicht 15 beispielsweise aus einem Nichtmetall, beispielsweise aus einem Kunststoff, hergestellt sein. Die Isolierschicht 15 und die Blechung 13 können zumindest teilweise in dem Galettenmantel eingebettet sein - wie bei dem Magnetlager 6.1 in Fig. 1 gezeigt - oder unmittelbar aufragend an der Oberfläche der Innenseite des Galettenmantels 1 angebracht sein - wie bei dem Magnetlager 6.2 in Fig. 1 dargestellt

In den Fällen, bei welchen eine aktive Kühlung der Blechung 13 gewünscht wird, könnten an den Stirnseiten der Blechung 13 radial umlaufende Kühlrippen 18 ausgebildet sein, wie in Fig. 1 dargestellt.

Zusätzlich könnte die Blechung 13 mehrere axial gerichtete Bohrungen 16 beinhalten, die einen Luftdurchtritt zur Kühlung der Blechung 13 ermöglichen, wie in Fig. 2 dargestellt

Zur Erzeugung eines Küblfluidstroms ist ein Fluidstromerzeuger 30 vorgesehen, der einen Kühlfluidstrom, vorzugsweise einen Kühlluftstrom ins Innere des Galettenmantels 1 leitet, wie in Fig. 1 gezeigt. Die zur Kühlung der Blechung 13 vorgesehenen Kühlmittel 16, 18 und 30 sind beispielhaft und nur für den Fall, daß eine Überhitzung der Blechung 13 zu erwarten ist, einsetzbar.

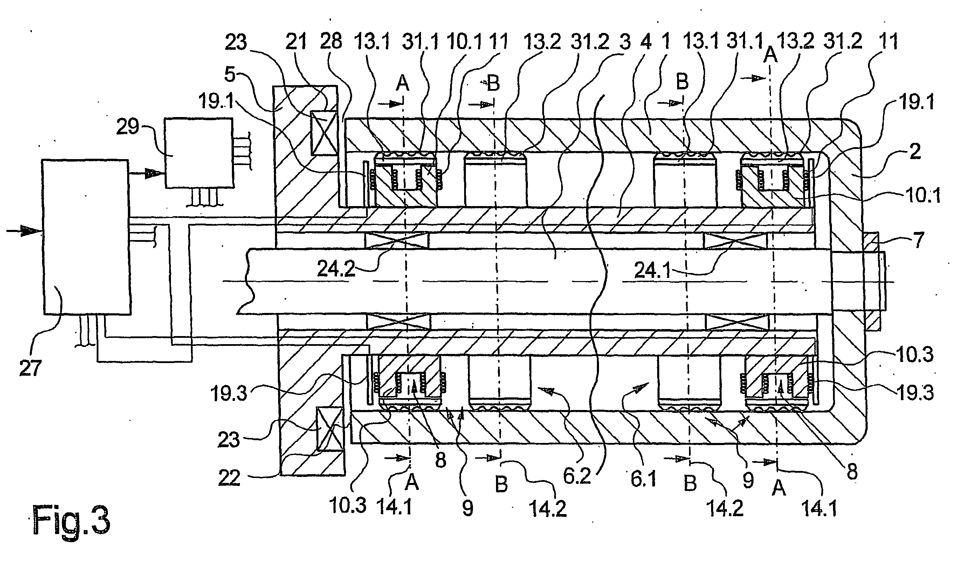

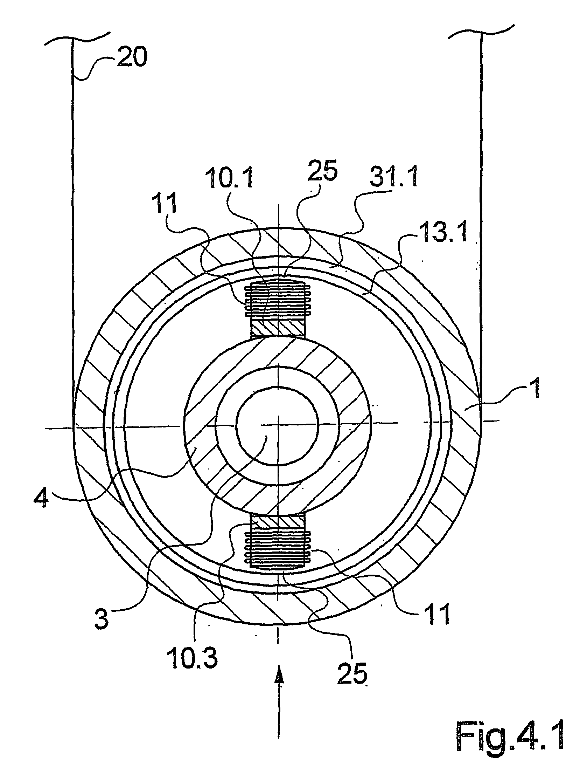

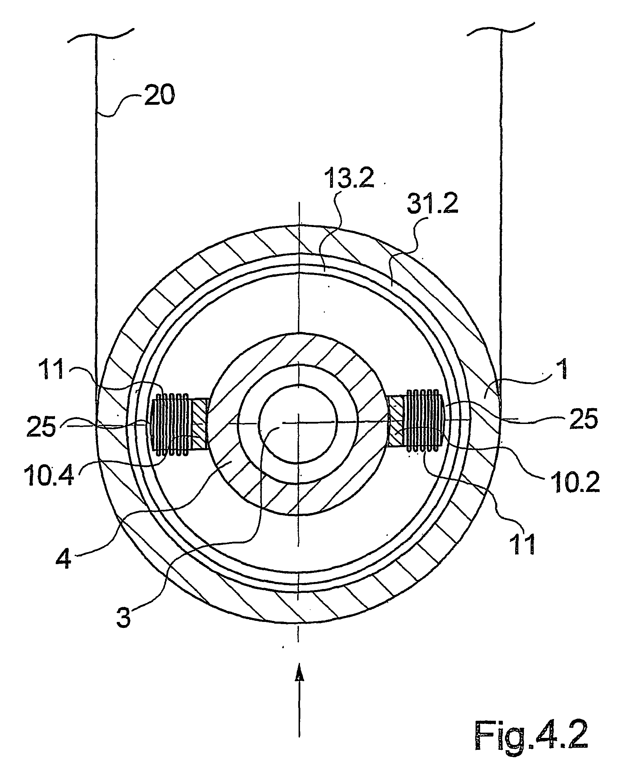

Ein weiteres Ausführungsbeispiel einer erfindungsgemäßen Galette ist in den Figuren 3 und 4 dargestellt. Hierbei ist das Ausführungsbeispiel in Fig. 3 schematisch in einem Längsschnitt und in Fig. 4 in mehreren Querschnitten längs der Lagerebenen dargestellt Fig. 4.1 und Fig. 4.2 zeigen jeweils einen Querschnitt einer Lagerebene eines Magnetlagers. Die Bauteile gleicher Funktion sind mit identischen Bezugszeichen gekennzeichnet.

Das Ausführungsbeispiel entspricht im wesentlichen dem Ausführungsbeispiel der erfindungsgemäßen Galette nach Fig. 1 und Fig. 2, so daß nachfolgend nur die wesentlichen Unterschiede beschrieben werden.

Das Ausführungsbeispiel der erfindungsgemäßen Galette nach Fig. 3 und 4 besitzt einen lang auskragenden Träger 4, der einseitig an einem hier nicht dargestellten Maschinengestell befestigt ist. An dem Träger 4 ist der hohlzylindrisch ausgebildete Galettenmantel 1 drehbar gelagert. Zur Lagerung des Galettenmantels 1 sind die radial wirkenden Magnetlager 6.1 und 6.2 sowie ein Axiallager 23 vorgesehen. Die Magnetlager 6.1 und 6.2 sind identisch ausgebildet, so daß die nachfolgende Beschreibung für beide Magnetlager gilt. Bei dem Magnetlager 6 wird das stehende Teil 8 durch mehrere Polelemente 10.1 bis 10.4 gebildet. Die Polelemente 10.1 bis 10.4 sind in zwei nebeneinanderliegenden Lagerebenen 14.1 und 14.2 aufgeteilt. In jeder Lagerebene 14 sind zwei sich am Umfang des Trägers 4 gegenüberliegende Polelemente 10 angeordnet. Die Polelemente 10 sind U-förmig ausgebildet und tragen an jedem Schenkel eine Erregerwicklung 11. Die Schenkel bilden die Polenden 12 der Polelemente 10 und führen im Betrieb einen axail ausgerichteten Magnetfluß.

In jeder Lagerebene 14.1 und 14.2 ist jeweils eine Blechung 13 den Polelementen 10 der jeweiligen Lagerebene 14 zugeordnet. Die Blechung 13 ist hülsenförmig ausgebildet, und über eine Isolierschicht 15 mit der Innenseite des Galettenmantels 1 fest verbunden. Die Isolierschicht 15 wird hierbei durch einen wellenförmigen Mantelring 31 gebildet, welcher vorteilhaft eine kleine Kontaktfläche zwischen dem Galettenmantel 1 und der Isolierschicht 15 einerseits und der Blechung 13 und der Isolierschicht 15 andererseits bildet.

Bei dem in Fig. 3 und 4 dargestellten Ausführungsbeispiel ist den Polelementen 10.1 und 10.3 der Lagerebene 14.1 die Blechung 13.1 und den Polelementen 10.2 und 10.4 in der Lagerebene 14.2 die Blechung 13.2 zugeordnet. Die Blechung 13 könnte hierbei beispielsweise auch durch einen einteiligen Ring gebildet sein, der aus einem magnetisierbaren Material hergestellt ist. Es ist jedoch auch möglich, die Blechung durch mehrere scheibenförmige Blechringe oder Blechsegmente herzustellen.

Den Polelementen 10.1 bis 10.4 sind die Sensoren 19.1 bis 19.4 zugeordnet. Die Erregerwicklungen 11 der Polelemente 10.1 bis 10.4 sind gemeinsam mit den Sensoren 19.1 bis 19.4 an der Lagersteuereinheit 27 angeschlossen. Jedes der Polelemente 10 kann dabei unabhängig von den benachbarten Polelementen gesteuert werden. Dabei wird der sich zwischen den Polenden 12 der Polelemente 10.1 bis 10.4 und der Blechung 13.1 und 13.2 eingestellte Lagerspalt 25 im wesentlichen konstant gehalten.

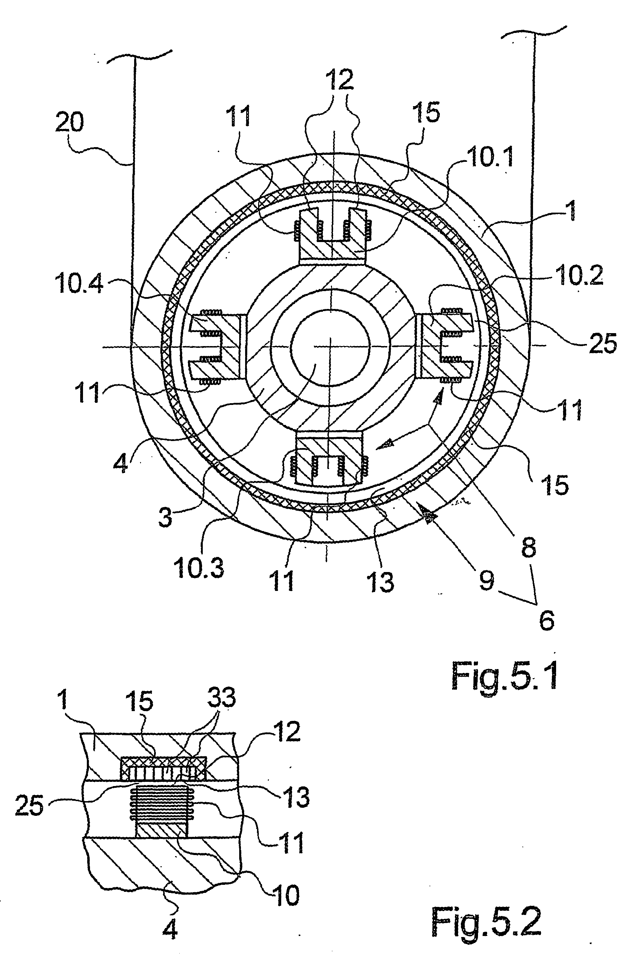

In Fig.5 ist eine Schnittansicht einer Galette beispielweise der Galette nach Fig. 1 und Fig. 2 mit einem weiteren Ausführungsbeispiel einer Magnetlagerung dargestellt. In Fig. 5.1 ist kompletter Schnitt quer zur Drehachse der Galette gezeigt Die Fig. 5.2 zeigt dagegen nur eine Ausschnitt eines Längsschnittes durch die Galette. Die Bauteile gleicher Funktion haben die gleichen Bezugszeichen erhalten.

Der Aufbau der Galette entspricht im wesentlichen dem Ausführungsbeispiel nach Fig. 1 und Fig. 2, so dass auf die vorhergehende Beschreibung Bezug genommen wird und nachfolgend nur die Unterschiede aufgeführt sind.
Der Galettenmantel 1 ist durch zumindest ein radial wirkendes Magnetlager 6 an einem auskragenden Träger 4 gelagert. Der Träger 4 ist hohlzylindrisch ausgebildet. Der hohlzylindrische Träger 4 wird hierbei von der Antriebswelle 3 durchdrungen.
Das Magnetlager 6 besteht aus einem stehenden Teil 8, der an dem Träger 4 befestigt ist, und einem drehenden Teil 9, das an der Innenseite des Galettenmantels 1 befestigt ist und mit dem Galettenmantel 1 umläuft. Der stehende Teil 8 des Magnetlagers 6 wird durch mehrere Polelemente 10 gebildet, die gleichmäßig am Umfang des Trägers 4 verteilt angebracht sind. In diesem Ausführungsbeispiel ist der stehende Teil 8 des Magnetlagers 6 durch vier Polelemente 10.1, 10.2, 10.3 und 10.4 bildet. Jedes der Polelemente ist U-förmig ausgebildet und besitzt die Polenden 12. An den Schenkeln der U-förmigen Polelemente 10.1 bis 10.4 sind Erregerwicklungen 11 aufgenommen, die mit einer Energieversorgungseinheit (hier nicht dargestellt) verbunden sind. Die Erregerwicklung 11 und die Polenden 12 eines Polelementes 10 sind derart ausgeführt, dass ein radial ausgerichtetes Magnetfeld erzeugt wird. Hierzu liegen sich die Polenden 12 des U-förmigen Polelementes 10 in Umfangsrichtung des Galettenmantels 1 gegenüber.

Die Polelemente 10.1 bis 10.4 sind in einer Lagerebene jeweils um 90° versetzt zueinander am Umfang des Trägers 4 angebracht

Das drehende Teil 9 des Magnetlagers 6 wird durch eine Blechung 13 und eine mit der Blechung 13 verbundene Isolierschicht 15 gebildet, die gemeinsam an der Innenseite des Galettenmantels 1 eingebettet sind. Die Isolierschicht 15 ist hülsenförmig ausgebildet und umschließt die hülsenförmige Blechung 13 vollständig. Die Isolierschicht 15 erstreckt sich dabei auch über die Stirnseiten der Blechung 13. Die Blechung 13 ist aus einer Vielzahl scheibenförmiger, dünnwandiger Blechringe 33 gebildet, die in Längsrichtung des Galettenmantels 1 hintereinander liegend zu einer Blechhülse zusammengefügt sind. Die Blechringe 33 sind jeweils durch ein Isoliermaterial miteinander verbunden. Die Blechung 13 erstreckt sich in axialer Richtung soweit, daß die Polenden 12 der Polelemente 10.1 bis 10.4 vollständig überdeckt sind und zwischen den Polenden 12 der Polelemente 10.1 bis 10.4 und der Blechung 13 ein Lagerspalt 25 gebildet wird, so daß zwischen den Polelementen 10.1 bis 10.4 und der Blechung 13 eine magnetische Kraft erzeugbar ist. Die Polelemente 10 können aus einem Vollmaterial oder aus einer Vielzahl von Blechen, die radial und/oder axial hintereinander gestapelt sind, geformt sein.
Im Betrieb wird die aktuelle Lage des Galettemnantels 1 durch Sensoren im Bereich der Lagerebene gemessen, und die Meßwerte werden der Lagersteuereinheit zugeleitet. In der Lagersteuereinheit wird aus den Meßwerten die Lage des Galettenmantels 1 in der Lagerebene ermittelt und entsprechend der gewünschten Korrektur der Lage werden die einzelnen Erregerwicklungen 11 der Polelemente 10 des Magnetlager 6 angesteuert. Somit stellt sich zwischen der Blechung 13 und den Polenden 12 der Polelemente 10 ein im wesentlichen gleichbleibender Lagerspalt 25 ein. Durch den schichtweisen Aufbau der Blechung 13 durch das Zusammenfügen mehrerer Blechringe 33 finden keine wesentlichen Ummagnetisierungsverluste beim Übergang des magnetischen Flusses in die Blechung statt.

Die Erfindung beschränkt sich nicht auf die in den Figuren 1 bis 5 dargestellten Ausführungsbeispiele der erfindungsgemäßen Galette. Grundsätzlich könnte der Träger 4 als eine Achse ausgebildet sein, an deren Umfang Einschnitte zur Aufnahme der Polelemente enthalten sind. Am Umfang der Achse könnte ein drehbarer Galettenmantel geführt sein. Die Ausbildung der Magnetlager 6 könnte unverändert übernommen werden.
Die Erfindung erfaßt ebenso Ausführungsbeispiele, bei welchen die Antriebswelle magnetisch gelagert ist. Hierzu sind die Polelemente der Magnetlager innerhalb eines hohlzylindrischen Trägers angeordnet. Am Umfang der Welle könnte eine Blechung ausgebildet sein, die mit den Polelementen in einer Lagerebene angeordnet sind. Alle hier nicht dargestellten Ausführungsbeispiele haben gemein, daß das drehende Teil des Magnetlagers durch eine Blechung gebildet ist, die an einem der drehenden Bauteile der Galette befestigt ist.

### Bezugszeichenliste

- 1: Walzenmantel
- 2: Stirnwand
- 3: Welle
- 4: Träger
- 5: Bund
- 6: Magnetlager
- 7: Spannelement
- 8: stehendes Teil
- 9: drehendes Teil
- 10: Polelement
- 11: Erregerwicklung
- 12: Polende
- 13: Blechung
- 14: Lagerebene
- 15: Isolierschicht
- 16: Bohrungen
- 18: Kühlrippen
- 19: Sensor
- 20: Faden
- 21: Nut
- 22: Stirnseite
- 23: Axiallager
- 24: Notlauflager
- 25: Lagerspalt
- 26: Heizeinrichtung
- 27: Lagersteuereinheit
- 28: Lagerspalt
- 29: Energieversorgungseinheit
- 30: Fluidstromerzeuger
- 31: Mantelring
- 31: Blechsegment
- 33: Blechring

## Patentansprüche

1. Galette zum Führen von zumindest einem Faden mit einem hohlzylindrischen Galettenmantel (1), an dessen Umfang der Faden geführt ist, und mit einem Träger (4), an welchem der Galettenmantel (1) durch mehrere Lager (6, 23) drehbar gelagert ist, wobei zumindest eines der Lager ein radial wirkendes Magnetlager (6) ist, welches aus einem drehenden Teil (9) und einem an dem Träger (4) angebrachten stehenden Teil (8) besteht, wobei zwischen den Teilen (8, 9) ein La gerspalt (25) gebildet ist und wobei das stehende Teil (8) zumindest ein Polelement (10) mit zumindest einer Erregerwicklung (11) auf weist,
**dadurch gekennzeichnet, daß**
das drehende Teil (9) zumindest eine Blechung (13) aus einem magnetisierbaren Material aufweist und daß das Polelement (10) und die Blechung (13) zur Führung eines magnetischen Flusses zusammenwirken.

2. Galette nach Anspruch 1,
**dadurch gekennzeichnet, daß**
die Blechung (13) an der Innenseite des Galettemnantels (I) aufragend und/oder eingebettet befestigt ist und daß die Blechung (13) den Polenden (12) des Polelementes (10) mit einem den Lagerspalt (25) bildenden Abstand radial gegenüber steht

3. Galette nach Anspruch 1 oder 2,
**dadurch gekennzeichnet, daß**
die Blechung (13) durch mehrere scheibenförmige, dünne Blechringe (32) gebildet ist, welche Blechringe (32) axial nebeneinander liegend zusammengefügt sind, um einen Magnetfluß in Umfangsrichtung des Galettenmantels zu führen.

4. Galette nach Anspruch 1 oder 2,
**dadurch gekennzeichnet, daß**
die Blechung (13) durch mehrere scheibenförmige, dünne Blechseg mente (32) gebildet ist, welche Blechsegmente (32) radial nebeneiriander liegend zusammengefügt sind, um einen Magnetfluß in Längsrichtung des Galettenmantels zu fuhren.

5. Galette nach einem der vorgenannten Ansprüche,
**dadurch gekennzeichnet, daß**
eine Isolierschicht (15) zwischen dem Galettenmantel (1) und der Blechung (13) ausgebildet ist, um einen Wärmeaustausch und/oder einen magnetischen Streufluß zwischen der Blechung (13) und dem Galettenmantel (1) zu vermeiden.

6. Galette nach Anspruch 5,
**dadurch gekennzeichnet, daß**
die Isolierschicht (15) durch einen wellenförmigen Mantelring (31) gebildet ist, welcher sich über äußere Wellenbögen an der Innenseite des Galettenmantels (1) abstutzt

7. Galette nach einem der Ansprüche 1 bis 6,
**dadurch gekennzeichnet, daß**
der Blechung (13) ein Kühlmittel zugeordnet ist, um in der Blechung (13) auftretende Wärme abzuführen.

8. Galette nach Anspruch 7,
**dadurch gekennzeichnet, daß**
das Kühlmittel einen Fluidstromerzeuger (30) aufweist, welcher einen Kühlfuidstrom, vorzugsweise einen Kühlluftstrom durch mehrere Bohrungen (16) innerhalb der Blechung (13) und/oder entlang mehrerer Kühlrippen (18) an der Blechung (13) erzeugt

9. Galette nach einem der vorgenannten Ansprüche,
**dadurch gekennzeichnet, daß**
das stehende Teil (8) des Magnetlagers (6) mehrere Polelemente (10.1-10.4) mit mehreren Wicklungen (11) aufweist, welche Polelemente (10.1-10.4) in einer Lagerebene (14) angeordnet sind und welchen Polelementen (10.1-10.4) eine gemeinsame Blechung (13) zugeordnet ist.

10. Galette nach einem der Ansprüche 1 bis 9,
**dadurch gekennzeichnet, daß**
das stehende Teil (8) des Magnetlagers (6) mehrere Polelemente (10.1-10.4) mit mehreren Wicklungen (11) aufweist, welche Polelemente (10.1-10.4) in mehreren Lagerebenen (14.1, 14.2) angeordnet sind und welchen Polelementen (10.1-10.4) mehrere Blechungen (13.1, 13.2) zugeordnet sind.

11. Galette nach Anspruch 10,
**dadurch gekennzeichnet, daß**
zumindest einige der Polelemente (10.1, 10.2) von Lagerebene (14.1) zu Lagerebene (14.2) winkelversetzt an dem Träger (4) verteilt angeordnet sind und daß in jeder Lagerebene (14.1, 14.2) eine der Blechungen (13.1, 13.2) angeordnet ist

12. Galette nach einem der vorgenannten Ansprüche,
**dadurch gekennzeichnet, daß**
jedem der Polelemente (10.1-10.4) jeweils ein Sensor (19) zur Lageerfassung des Galettenmantels (1) zugeordnet ist und daß die Sensoren (19) und die Erregerwicklungen (11) der Polelemete (10) mit einer Lagersteuereinheit (13) verbunden sind.

13. Galette nach einem der vorgenannten Ansprüche,
**dadurch gekennzeichnet, daß**
der Galettenmantel (1) durch zwei radial wirkende Magnetlager (6.1, 6.2) und einem Axiallager (23) gelagert ist, wobei die stehenden Teile (8) der Magnetlager (6.1, 6.2) mehrere Polelemente (10) mit Erregerwicklungen (11) und die drehenden Teile (9) der Magnetlager (6.1, 6.2) mehrere Blechungen (13) aufweisen.

## Claims

1. Godet for guiding at least one yam, the godet comprising a hollow-cylindrical casing (1) with the yarn advancing over the circumference thereof, and a support (4), which rotatably mounts the godet casing (1) by means of a plurality of bearings (6, 23), with at least one bearing being a radially active magnetic bearing (6), which comprises a rotating part (9) and a stationary part (8) mounted to the support (4), with a bearing gap (25) forming between the parts (8, 9), and the stationary part (8) comprising at least one pole element (10) with at least one excitation winding (11),
**characterized in that**
the rotating part (9) comprises at least one laminated component (13) of a magnetizable material, and that the
pole element (10) and the laminated component (13) cooperate for guiding a magnetic flux.

2. Godet of claim 1,
**characterized in that**
the laminated component (13) is secured to the inner side of the godet casing (1) in a projecting and/or an embedded manner, and that the laminated component (13) radially faces the ends (12) of the pole element (10) with a spacing that forms the bearing gap (25).

3. Godet of claim 1 or 2,
**characterized in that**
the laminated component (13) is formed by a plurality of disk-shaped, thin sheet metal rings (33), which are joined in axial side-by-side relationship for guiding a magnetic flux in the circumferential direction of the godet casing.

4. Godet of claim 1 or 2,
**characterized in that**
the laminated component (13) is formed by a plurality of disk-shaped, thin sheet metal segments (32), which are joined in radial side-by-side relationship for guiding a magnetic flux in the longitudinal direction of the godet casing.

5. Godet of one of the foregoing claims,
**characterized in that**
an insulating layer (15) is formed between the godet casing (1) and the laminated component (13) for avoiding a heat exchange and/or a magnetic leakage flux between the laminated component (13) and the godet casing (1).

6. Godet of claim 5,
**characterized in that** the insulating layer (15) is formed by an undulated casing ring (31), which is supported via outer undulations on the inner side of the godet casing (1).

7. Godet of one of claims 1-6,
**characterized in that**
a coolant is associated with the laminated component (13) for dissipating heat that develops in the laminated component (13).

8. Godet of claim 7,
**characterized in that**
the coolant comprises a fluid stream producer (30), which generates a cooling fluid stream, preferably a cooling air stream through a plurality of bores (16) within the laminated component (13) and/or along a plurality of cooling ribs (18) on the laminated component (13).

9. Godet of one of the foregoing claims,
**characterized in that**
the stationary part (8) of the magnetic bearing (6) comprises a plurality of pole elements (10.1-10.4) with a plurality of windings (11), the pole elements (10.1-10.4) being arranged in a bearing plane (14), and a common laminated component (13) being associated to the pole elements (10.1-10.4).

10. Godet of one of claims 1-9,
**characterized in that**
the stationary part (8) of the magnetic bearing (6) comprises a plurality of pole elements (10.1-10.4) with a plurality of windings (11), the pole elements (10.1-10.4) being arranged in a plurality of bearing planes (14.1, 14.2), and a plurality
of laminated components (13.1, 13.2) being associated to the pole elements (10.1-10.4).

11. Godet of claim 10,
**characterized in that**
from bearing plane (14.1) to bearing plane (14.2), at least some of the pole elements (10.1,10.2) are arranged on the support (4) with an angular displacement, and that one of the laminated components (13.1, 13.2) is arranged in each bearing plane (14.1, 14.2).

12. Godet of one of the foregoing claims,
**characterized in that**
a sensor (19) is associated to each of the pole elements (10.1-10.4) for determining the position of the godet casing (1), and that the sensors (19) and the excitation windings (11) of the pole elements (10) connect to a bearing control unit (27).

13. Godet of one of the foregoing claims,
**characterized in that**
the godet casing (1) is supported by means of two radially active magnetic bearings (6.1, 6.2) and one thrust bearing (23), with the stationary parts (8) of the magnetic bearings (6.1, 6.2) comprising a plurality of pole elements (10) with excitation windings (11), and the rotating parts (9) of the magnetic bearings (6.1, 6.2) comprising a plurality of laminated components (13).

## Revendications

1. Galet pour guider au moins un fil avec une enveloppe de galet creuse-cylindrique (1), sur la circonférence duquel le fil est guidé, et avec un support (4) contre lequel l'enveloppe de galet (1) est montée de façon rotative au moyen d'une pluralité de paliers (6, 23), au moins un des paliers étant un palier magnétique (6) agissant radialement, lequel consiste en une pièce rotative (9) et en une pièce stationnaire (8), rapportée sur le support (4), dans quel cas un espace de roulement (25) est formé entre les pièces (8, 9) et dans quel cas la pièce stationnaire (8) a au moins un élément de pôle (10) avec au moins un enroulement d'excitation (11), **caractérisé en ce que** la pièce rotative (9) a au moins un assemblage de tôles (13) d'un matériau magnétisable et **en ce que** l'élément de pôle (10) et l'assemblage de tôles (13) coopèrent pour conduire un flux magnétique.

2. Galet selon la revendication 1, **caractérisé en ce que** sur la face intérieure de l'enveloppe de galet (1) l'assemblage de tôles (13) est fixé de façon dressée et/ou encastrée et **en ce que** l'assemblage de tôles (13) est radialement opposé aux extrémités des pôles (12) de l'élément de pôle (10) avec un écart formant l'espace de roulement (25).

3. Galet selon la revendication 1 ou 2, **caractérisé en ce que** l'assemblage de tôles (13) est formé par une pluralité d'anneaux de tôle minces en forme de disques (32), lesquels anneaux de tôle (32) sont joints en étant disposés axialement l'un à coté de l'autre, pour guider un flux magnétique en direction circonférentielle de l'enveloppe du galet.

4. Galet selon la revendication 1 ou 2, **caractérisé en ce que** l'assemblage de tôles (13) est formé par plusieurs segments de tôle minces en forme de disques (32), lesquels segments de tôle (32) sont joints en étant disposés radialement l'un à coté de l'autre, pour guider un flux magnétique en direction longitudinale de l'enveloppe du galet.

5. Galet selon l'une des revendications précédentes, **caractérisé en ce qu'**une couche isolante (15) est formée entre l'enveloppe de galet (1) et l'assemblage de tôles (13), afin d'éviter un échange de chaleur et/ou un flux de fuite entre l'assemblage de tôles (13) et l'enveloppe de galet (1).

6. Galet selon la revendication 5, **caractérisé en ce que** la couche isolante (15) est formée par un anneau d'enveloppe en forme d'ondulations (31), lequel est supporté à l'intermédiaire d'ondulations extérieures sur la face intérieure de l'enveloppe de galet (1).

7. Galet selon l'une des revendications 1 à 6, **caractérisé en ce qu'**un réfrigérant est associé à l'assemblage de tôles (13) pour évacuer la chaleur se produisant dans l'assemblage de tôles (13).

8. Galet selon la revendication 7, **caractérisé en ce que** le réfrigérant a un générateur de flux de fluide (30), qui génère un flux de fluide réfrigérant, de préférence un flux d'air réfrigérant, à travers une pluralité de trous (16) à l'intérieur de l'assemblage de tôles (13) et/ou le long d'une pluralité d'ailettes de refroidissement (18) sur l'assemblage de tôles (13).

9. Galet selon l'une des revendications précédentes, **caractérisé en ce que** la pièce stationnaire (8) du palier magnétique (6) a une pluralité d'éléments de pôles (10.1-10.4) avec une pluralité d'enroulements (11), lesquels éléments de pôles (10.1-10.4) sont agencés dans un plan de palier (14) et auxquels éléments de pôles (10.1-10.4) un assemblage de tôles (13) commun est associé.

10. Galet selon l'une des revendications 1 à 9, **caractérisé en ce que** la pièce stationnaire (8) du palier magnétique (6) a une pluralité d'éléments de tôles (10.1-10.4) avec une pluralité d'enroulements (11), lesquels éléments de pôles (10.1-10.4) sont agencés dans une pluralité de plans de paliers (14.1, 14.2) et auxquels éléments de pôles (10.1-10.4) une pluralité d'assemblages de tôles (13.1, 13.2) est associée.

11. Galet selon la revendication 10, **caractérisé en ce qu'**au moins quelques éléments de pôles (10.1, 10.2) de plan de palier (14.1) à plan de palier (14.2) sont agencés de manière à être répartis en décalage angulaire sur le support (4) et **en ce qu'**un des assemblages de tôles (13.1, 13.2) est agencé dans chaque plan de palier (14.1, 14.2).

12. Galet selon l'une des revendications précédentes, **caractérisé en ce que** pour détecter la position de l'enveloppe de galet (1) respectivement un capteur (19) est associé à chacun des éléments de pôles (10.1-10.4) et **en ce que** les enroulements d'excitation (11) des éléments de pôles (10) sont reliés à une unité de commande de palier (13).

13. Galet selon l'une des revendications précédentes, **caractérisé en ce que** l'enveloppe de galet (1) est montée par deux paliers magnétiques (6.1, 6.2) agissant radialement et par un palier axial (23), dans quel cas les pièces stationnaires des paliers (6.1, 6.2) ont une pluralité d'éléments de pôles (10) avec des enroulements d'excitation (11) et les pièces rotatives (9) des paliers magnétiques (6.1, 6.2) disposent d'une pluralité d'assemblages de tôles (13).
